# EUROPEAN PATENT APPLICATION

(11) **EP 2 899 682 A1**
(43) Date of publication of application: **29.07.2015**
(21) Application number: 13839457.2
(22) Date of filing: 20.09.2013
(51) Int. Cl.: G06Q 50/04

(54) **SERVICE PROVISION METHOD AND SERVICE PROVISION SYSTEM**

(30) Priority: 24.09.2012 JP 2012209877
(71) Applicant: Nitto Denko Corporation, Ibaraki-shi, Osaka 567-8680 (JP)
(72) Inventor: NII, Nobuhiko, Ibaraki-shi Osaka 567-8680 (JP)
(74) Representative: Grünecker Patent- und Rechtsanwälte PartG mbB
(86) International application number: PCT/JP2013/075576
(87) International publication number: WO 2014/046265

(57) **Abstract**

One of the purposes of the present invention is to provide a service provision method that makes it possible to perform product management without the need to assign new product identifier numbers after a merger between manufacturers, and that makes it possible for each consumer to obtain reliable product information. A one-of-a-kind unique code assigned to a product is read by a consumer terminal (4), and an inquiry regarding the product is transmitted via a network to the base web server (11) of a base system (2). The base web server (11) searches to determine whether a URL for the web server (23) of the manufacturer is associated with the unique code of the product that is the subject of the inquiry and transfers the inquiry from the consumer to the web server (23) of the manufacturer when a URL is associated with the unique code. In response to the transferred inquiry, the web server (23) of the manufacturer transmits stored information that is associated with the unique code of the product that is the subject of the inquiry to the consumer terminal (4).

## Description

### Technical Field

The present invention relates to a service provision method using unique codes and a service provision system using unique codes.

### Background Art

Conventionally, makers assign product identification numbers such as serial numbers to respective manufactured products in order to manage them individually. Product identification numbers are not only used for management of individual products but also used, as symbols for identifying products individually, for countermeasures against copy products and various services such as after-sales services and collection of recalled products.

### Summary of Invention

### Technical Problem

However, management using product identification numbers is done independently by each maker, that is, each maker manages its products using product identification numbers generated on its own. Therefore, when, for example, plural makers have merged into a single company, sets of products that have been managed by the respective makers are placed under a common management system. It is therefore difficult to continue services that use product identification numbers that are generated on their own and used by the makers involved before the merger. Enormous labor is necessary to establish a common database and assign new numbers to related products.

An object of the present invention is therefore to provide a service provision method and a service provision system that, even when makers have merged into a single company, allow the new company to manage its products without the need for assigning new product identification numbers to those products and to continue related services as well as allow consumers to acquire reliable product information.

### Solution to Problem

To solve the above problems, the present invention provides a service provision method for requesting issuance of a unique code for identification of a product by a maker terminal, issuing the unique code randomly and uniquely in response to the issuance request by a base terminal, and providing a service using the unique code assigned to a product, the service provision method including: a step that a consumer terminal acquires a unique code that is attached to a product and makes an inquiry about the product by transmitting the acquired unique code to the base terminal; a step that the base terminal judges whether or not the transmitted unique code is an issued one, and if judged that the transmitted unique code is not an issued one, the base terminal transmits information to an effect that the transmitted unique code is not an issued one to the consumer terminal, whereas if judged that the transmitted unique code is an already issued one, the base terminal judges whether or not a URL of the maker terminal is received from the maker terminal in advance as a transfer destination URL that is correlated with the transmitted unique code, and if judged that the URL of the maker terminal is not received, the base terminal transmits information to an effect that the transmitted unique code is an already issued one to the consumer terminal, whereas if judged that the URL of the maker terminal is received, the base terminal transfers the inquiry to the URL of the maker terminal that is the transfer destination; and a step that the maker terminal transmits information corresponding to the unique code relating to the transferred inquiry to the consumer terminal.

In the service provision method according to the present invention, it is preferable that the inquiry from the consumer terminal is transmitted to the base terminal over a network.

In the service provision method according to the present invention, it is preferable that the consumer terminal includes a personal computer or a smartphone.

In the service provision method according to the present invention, it is preferable that the information that corresponds to the unique code transmitted from the maker terminal to the consumer terminal contains a manufacture and sale history of the product to which the unique code is assigned.

In the service provision method according to the present invention, it is preferable that the information that corresponds to the unique code transmitted from the maker terminal to the consumer terminal contains information indicating whether or not the product to which the unique code is assigned corresponds to a sorted product.

In the service provision method according to the present invention, it is preferable that the information that corresponds to the unique code transmitted from the maker terminal to the consumer terminal contains information indicating whether or not the product to which the unique code is assigned corresponds to a recalled product.

A service provision method according to the present invention which provides a service using unique codes that are assigned uniquely to products for identification of the products includes: a consumer terminal which acquires a unique code that is attached to a product and makes an inquiry about the product by transmitting the acquired unique code over a network; a base terminal which receives the transmitted inquiry and judges whether or not the unique code is an issued one, wherein if judged that the transmitted unique code is not an issued one, the base terminal transmits information to an effect that the unique code is not an issued one to the consumer terminal, whereas if judged that the transmitted unique code is an already issued one, the base terminal judges whether or not a transfer destination URL that is correlated with the unique code is received in advance, and if judged that the transfer destination URL is not received, the base terminal transmits information to an effect that the unique code is an already issued one to the consumer terminal, whereas if judged that the transfer destination URL is received, the base terminal transfers the inquiry to the transfer destination URL; and a maker terminal which contains the transfer destination URL and transmits product information that is stored to be correlated with the unique code to the consumer terminal in response to the transferred inquiry.

### Advantageous Effects of Invention

According to the present invention, since unique codes that are issued uniquely are used as codes for management of products, even when plural makers have merged into a single maker, the resulting maker can easily manage products using unique codes that has been used before the merger without the need for having new product identification numbers assigned and thereby continue services in the same manners as before the merger. Each consumer can acquire reliable product information easily and surely using a unique code.

### Brief Description of Drawings

Fig. 1 shows the configuration of a service provision system according to the present invention.
Fig. 2 is a flowchart showing an example procedure of issuance of a unique code.
Fig. 3 is a flowchart showing an example procedure of acquisition of product information using a unique code.
Fig. 4 illustrates an example of how a consumer acquires product information using a unique code in purchasing a bag.
Fig. 5 illustrates an example of product management that is performed using unique codes in a case of merger of maker A and maker B.
Fig. 6 illustrates an example method of selection among items under distribution in which sets of pieces of product information about sorted products are acquired using unique codes.
Fig. 7 illustrates an example method of collection of recalled products in which sets of pieces of product information about recalled products are acquired using unique codes.

### Description of Embodiments

A service provision system and a service provision method according to an embodiment of the present invention will be hereinafter described using the accompanying drawings.

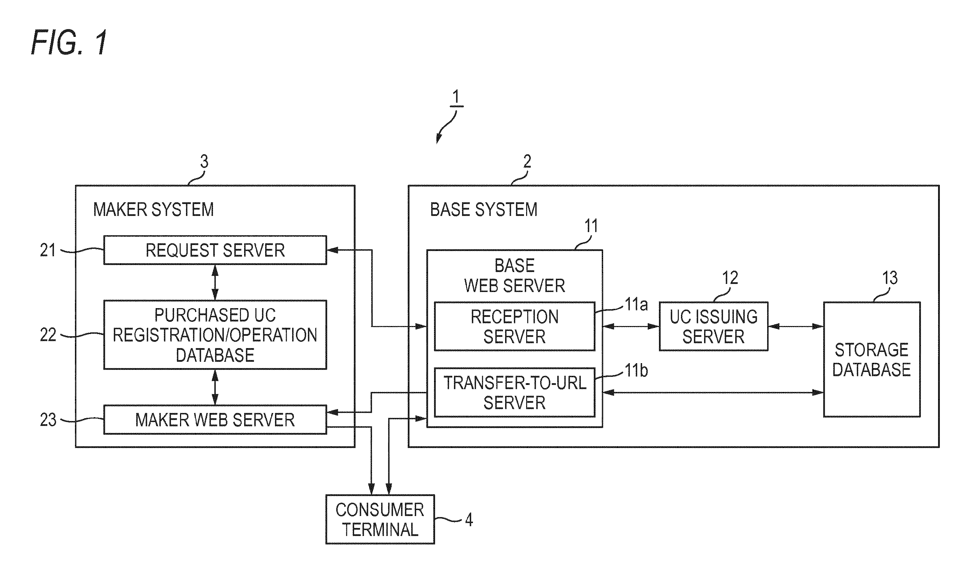

Fig. 1 shows the configuration of a service provision system 1 which provides a service using unique codes (UC). The service provision system 1 is equipped with a base system 2, a maker system 3, and a consumer terminal 4 which are connected to each other by a network such as the Internet so as to communicate with each other.

Although plural maker systems 3 and plural consumer terminals 4 are connected to the base system 2, only one maker system and only one consumer terminal are shown in Fig. 1 to make it easier to see and to facilitate understanding of the related description.

The base system 2 is a system that issues unique codes and answers inquiries relating to unique codes (or products that are assigned unique codes). The base system 2 is equipped with a base web server 11 (an example of a base terminal), a UC issuing server 12, and a storage database 13.

The term "unique code" means a code that is issued uniquely by the UC issuing server 12 and is an only code to appear around the world. A unique code is issued in response to a request from a customer (i.e., a maker that owns the maker system 3 shown in Fig. 1) and is a character string including numerals and symbols.

The base web server 11 is a server that receives a unique code issuance request that is transmitted from the maker system 3 over the network, transmits a unique code issued by the UC issuing server 12 to the maker system 3 over the network, receives an inquiry about a product (unique-code-assigned product) that is transmitted from the consumer terminal 4, and, if a maker URL is registered in such a manner as to be correlated with the unique code relating to the inquiry, transfers the inquiry to the registered URL.

As such, the base web server 11 functions as a reception server 11a for receiving a unique code issuance request, a unique-code-related inquiry, etc. and as a transfer-to-URL server 11b for transferring such an inquiry to a registered URL.

The UC issuing server 12 is a server that issues a unique code in response to an issuance request from the maker system 3 (i.e., a maker as a customer). The UC issuing server 12 produces a unique code that is a character string of a prescribed number of characters by generating a random number.

More specifically, for example, 36 alphanumeric characters consisting of 10 numerals from "0" to "9" and 26 alphabetical characters from "A" to "Z" are used to form each unique code. An 11-character character string is produced from the 36 characters by generating a random number by a random number generator randomly at an equal probability. In this case, since an 11-character character string is generated from the 36 characters, 36¹¹ (about one hundred thirty-one quadrillion, six hundred trillion) kinds of unique codes can be issued, which makes it possible to answer all issuance requests from makers.

The UC issuing server 12 transmits a character string produced by generating a random number to the base web server 11 as a unique code issued in response to a request from a maker. The UC issuing server 12 stores the thus-issued unique code in the storage database 13 as an "already issued unique code" in such a manner that it is correlated with the request source maker (e.g., using a maker code).

In issuing a unique code, the UC issuing server 12 judges, by referring to the storage database 13, whether or not a unique code produced by generating a random number is identical to one stored in the storage database 13 as an already issued unique code. If judged that the unique code just produced is identical to one stored in the storage database 13 as an already issued unique code, the UC issuing server 12 produces a unique code again by generating a random number. In this manner, issuance of the same duplicate unique code is prevented (prohibited); a new unique code can be issued that is different from any of the already issued unique codes stored in the storage database, that is, a new unique code can be issued without duplication.

The storage database 13 is stored with, as already issued unique codes, unique codes that have been produced by generating random numbers. The storage database 13 is stored with unique codes each of which is correlated with a maker that has purchased the unique codes as well as a URL of a web server that holds information relating to the unique codes.

The term "information relating to a unique code" means information that is prepared by a maker in advance and relates to a product to which the unique code is assigned. If a maker has information that can be presented for a product that is assigned a unique code, the maker registers, in advance, in the base system 2, a URL of an information source web server that holds that information. When received an inquiry about a certain product from a consumer, the base web server 11 judges whether or not the unique code of the inquiry product is correlated with a maker URL. If made an affirmative judgment, the base web server 11 performs processing for transferring the inquiry to the URL.

The maker system 3 is a system that requests the base system 2 to issue a unique code and provides a consumer with information about a unique-code-assigned product. The maker system 3 is a system that is constructed for each maker, and is equipped with, for example, a request server 21, a purchased UC registration/operation database 22, and a maker web server (an example of a maker terminal) 23.

The term "maker" that requests the base system 2 to issue a unique code, that is, purchases a unique code, includes, in addition to a maker (manufacturer) shown in Fig. 1, a trading company, a medical corporation, an agricultural corporation, an educational foundation, a religious corporation, a state organization, a municipal corporation, an incorporated body, a private concern, and other kinds of organizations.

The request server 21 is a server that transmits a request for issuance of a unique code to the base system 2 over a network and receives an issued unique code that is transmitted from the base system 2 (base web server 11).

A specific example of a communication means of the request server 21 is a terminal capable of performing a communication over a network, such as a personal computer (PC), a smartphone, a cell phone, or a portable information terminal.

The purchased UC registration/operation database 22 is a database that holds unique codes purchased from the base system 2. Each purchased unique code is assigned to a product of a maker and stored in the database in such a manner as to be correlated with the product. Operation information such as a product number assigned to a product by a maker on its own, a manufacture date, a lot number, a shipment destination, and a shipment date is also stored in such a manner as to be correlated with each set of a product and a unique code. The details of registration and operation can be determined by each maker and managed on its own.

The maker web server 23 is a server that transmits information about a unique-code-assigned product over the network in response to a request (inquiry) from a consumer. The maker web server 23 is stored with information for each unique-code-assigned product. For example, the maker web server 23 has information about products appear on a homepage and transmits corresponding information on the homepage to a consumer in response to a request from the consumer. Information prepared for each product may be stored in the purchased UC registration/operation database 22 in such a manner as to be correlated with a unique code assigned to it.

As described above, an inquiry relating to a unique code that comes from a consumer is first transmitted to the base web server 11 of the base system 2. The base web server 11 judges whether or not a URL of the maker web server 23 is correlated with the unique code relating to the inquiry product. If made an affirmative judgment, the base web server 11 transfers the inquiry from the consumer to the maker web server 23. In response to the inquiry transferred from the base web server 11, the maker web server 23 transmits, to the consumer, information about the product that is assigned the unique code relating to the inquiry.

For example, the term "information about a product" includes a product number, a manufacture date, a factory of manufacture, a sale date, a sale store name, a whole sale company, whether the product is a sorted product, whether the product is under recall, etc. Since these kinds of information are ones to be publicized and provided by an individual maker in response to a request from a consumer, their details are determined on a maker-by-maker basis. These kinds of information are updated to reflect new information, which makes it possible to send highly reliable information to consumers.

The consumer terminal 4 is a terminal for inquiring of the base system 2 about a product by transmitting a unique code (e.g., shown on a label, a tag, or the like) that is attached to the product and for receiving product information that is transmitted in response to the inquiry. The consumer terminal 4 may be a terminal capable of performing a communication over a network, such as a smartphone, a personal computer (PC), a cell phone, or a portable information terminal.

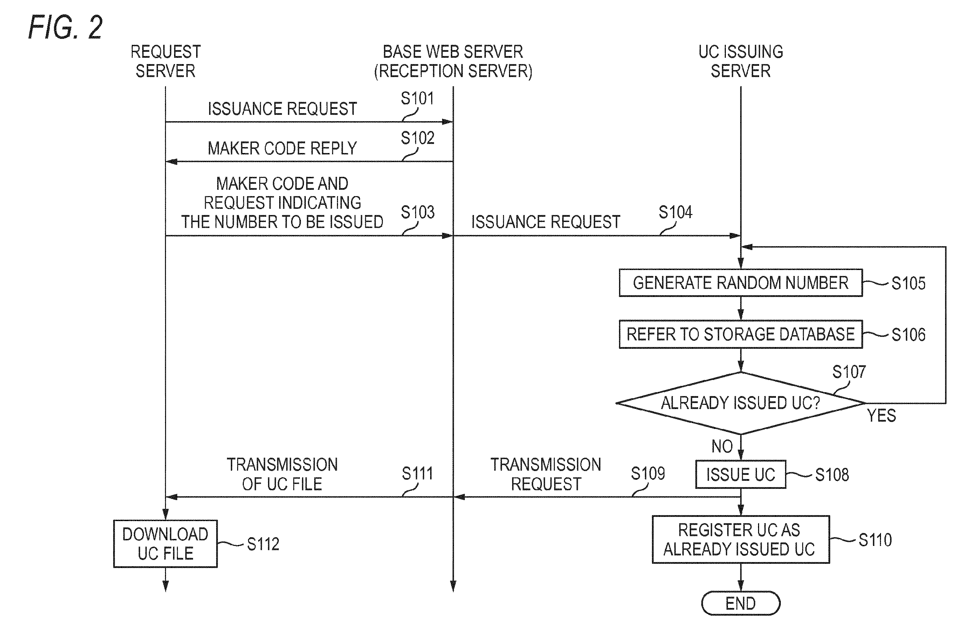

Next, an example procedure of issuance of a unique code will be described according to a flowchart of Fig. 2.

The request server 21 of the maker system 3 transmits a unique code issuance request to the base web server 11 (reception server 11a) of the base system 2 over the network (step S101).

The base web server 11, which has received the issuance request, returns a maker code for identification of a requesting maker to the request server 21 of the maker system 3 which is the request source (step S102). The maker code is a code that is determined by the base system 2 side.

The request server 21, which has received the maker code, transmits a request indicating the number of unique codes to be issued to the base web server 11 together with the maker code (step S103).

The base web server 11, which has received the request indicating the number of unique codes to be issued, requests the UC issuing server 12 to issue a unique code(s) by transmitting the received information (the maker code and the number of unique codes to be issued) to the UC issuing server 12 (step S104).

The UC issuing server 12, which has received the issuance request, produces a unique code by generating a random number (step S105). For example, a unique code is a string of 11 characters and is produced randomly from 36 alphanumeric characters that are prepared in advance.

The UC issuing server 12 refers to the storage database 13 which is stored with already issued unique codes (step S106) and judges whether or not there exists an already issued unique code that coincides with the unique code just produced (step S107).

If judged that there exists an already issued unique code that coincides with the unique code just produced, that is, the same unique code has already been issued (step S107: yes), the UC issuing server 12 returns to step S105, where it produces a new unique code again by generating a random number.

On the other hand, if there exists no already issued unique code that coincides with the unique code just produced, that is, the unique code just produced is one that has not been issued yet (step S107: no), the UC issuing server 12 issues the unique code just produced, that is, makes it an "issued unique code" (step S108). The issued unique code is transmitted to the base web server 11 so as to be transmitted to the request source maker (step S109).

Subsequently, the UC issuing server 12 registers the issued unique code in the storage database 13 as an already issued unique code (step S110). This registration is done in such a manner that the issued unique code is correlated with the request source maker. For example, the correlating is made by registering the issued unique code in the storage database 13 together with the maker code of the request source maker. As a result of this registration step, the contents of the storage database 13 is updated to reflect new information.

The base web server 11 transmits the unique code received from the UC issuing server 12 to the request server 21 of the maker system 3 over the network as a data file (UC file) (step S111).

The maker acquires the unique code by downloading the UC file received by the request server 21 (step S112). Thus, the unique code issuing process is completed.

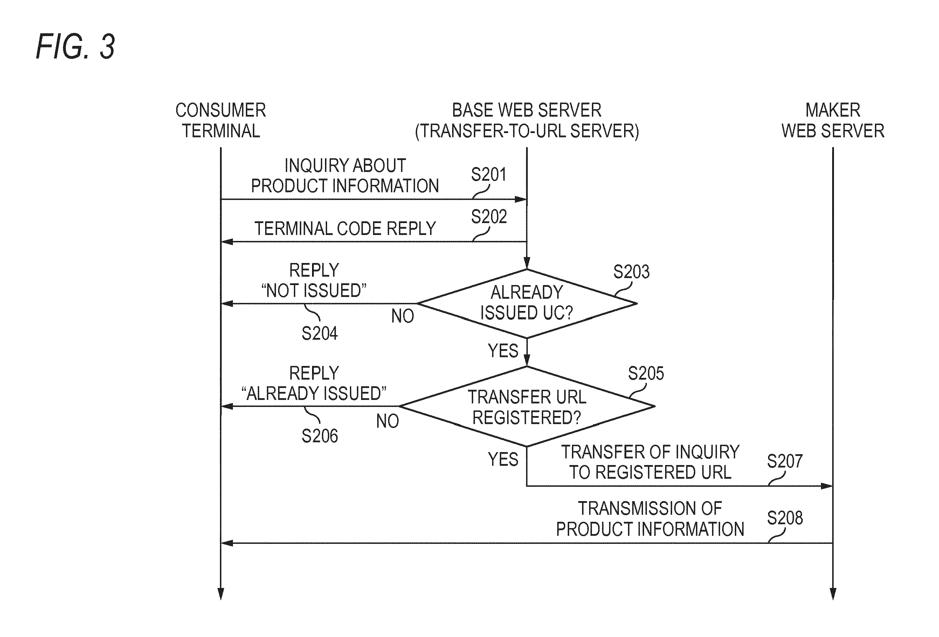

Next, an example procedure of acquisition of product information using a unique code will be described with reference to a flowchart of Fig. 3.

The consumer terminal 4 which a consumer owns transmits an inquiry about product information that he or she wants to know to the base web server 11 of the base system 2 over the network (step S201). The inquiry can be made by installing, in the consumer terminal 4, application software that is delivered from the base system 2.

For example, where the consumer terminal 4 owned by the consumer is a smartphone, the inquiry is made by reading a unique code that is attached to a product (e.g., shown on a tag) using a camera of the smartphone and transmitting out the read-out unique code.

The base web server 11, which has received the inquiry, returns a terminal code for identification of the consumer terminal 4 to the inquiry source consumer terminal 4 (step S202). The term "terminal code" means a code that is determined by the base system 2 side and assigned to every consumer terminal when it makes a first inquiry. The base web server 11 stores and holds the assigned terminal code and an Internet communication address (e.g., IP address or mail address) of the consumer terminal 4 in such a manner that they are correlated with each other.

Subsequently, the base web server 11 which has received the inquiry judges whether or not the transmitted unique code is an already issued one (step S203). This judgment is made by judging whether or not the same unique code as the transmitted unique code is stored in the storage database 13.

If judged that the transmitted unique code is not an issued one, that is, no identical unique code is stored in the storage database 13, the base web server 11 returns, to the consumer terminal 4, information to the effect that the transmitted unique code is not issued yet (step S204).

On the other hand, if judged that the transmitted unique code is an already issued one, that is, the same unique code is stored in the storage database 13, then the base web server 11 judges whether a transfer URL corresponding to the unique code is registered or not, that is, whether or not information about the product to which the unique code is assigned is prepared by the maker (step S205). This judgment is made by judging whether or not a URL of the maker web server 23 is stored in the storage database 13 in such a manner as to be correlated with the unique code also stored in the storage database 13.

If it is judged that no corresponding transfer URL is registered, that is, no URL of the maker web server 23 is correlated with the unique code, which means that no information is prepared for the product by the maker, the base web server 11 returns, to the consumer terminal 4, only information to the effect that the transmitted unique code is an already issued one (step S206).

On the other hand, if it is judged that a transfer URL is registered, that is, a URL of the maker web server 23 is correlated with the unique code, which means that information is prepared for the product by the maker, the base web server 11 transfers the consumer inquiry to the registered transfer URL (e.g., the URL of the maker web server 23) (step S207). In transferring the consumer inquiry, the base web server 11 attaches to it the terminal code (including a correlated mail address) of the inquiry consumer terminal 4 and the unique code of the product relating to the inquiry.

The maker web server 23, which has received the transferred inquiry, transmits, to the inquiry consumer terminal 4, information (e.g., information on the homepage of the maker) that is stored in such a manner as to be correlated with the product that is assigned the unique code (step S208). Thus, the information about the product is delivered to the consumer and the process for acquiring information about it using its unique code is completed.

Since the above-described service provision system and service provision method use unique codes that are issued uniquely as codes for management of products, a maker is allowed to establish a management framework that is more reliable than product management of a maker that uses product identification numbers of its own. Even when plural makers have merged and been necessitated to make identification and management of solids under a common management framework, the management under an existing management system using current issued unique codes without the need for constructing a new management system. Under such a management framework, consumers can easily obtain latest, accurate, and reliable information merely by reading a unique code with a terminal and transmitting an inquiry.

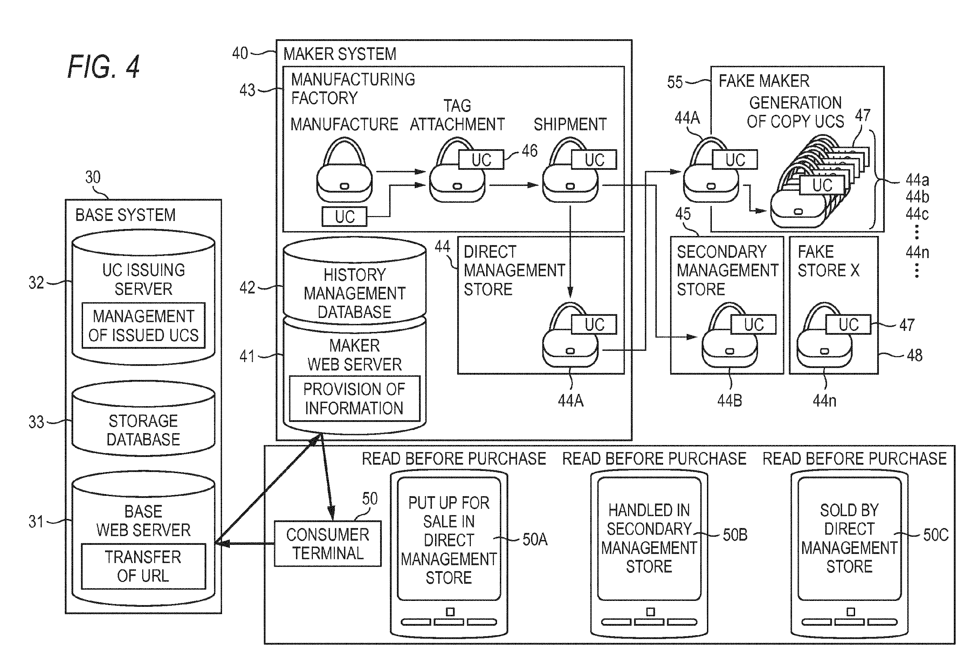

Next, specific examples of how a service is provided using unique codes will be described with reference to Figs. 4 to 7.

Fig. 4 illustrates an example of how a consumer acquires product information using a unique code in purchasing a branded bag.

Abase system 30 is equipped with a base web server 31, a UC issuing server 32, and a storage database 33 which correspond to and have the same functions as the base web server 11, the UC issuing server 12, and the storage database 13 shown in Fig. 1, respectively.

A maker system 40 is equipped with a maker web server 41 which corresponds to and have the same functions as the maker web server 23 shown in Fig. 1. The maker system 40 is equipped with a history management database 42 which corresponds to the purchased UC registration/operation database 22 shown in Fig. 1 and is stored with unique codes and sets of pieces of product information (they are correlated with each other) as well as history information of each product relating to its manufacture, shipment, a store that has sold it, etc. Fig. 4 describes how services are provided after purchase of unique codes, and hence a block corresponding to the request server 21 shown in Fig. 1 is omitted in Fig. 4.

A maker (hereinafter referred to as "maker A") for which the maker system 40 manufactures bags as products. Bags manufactured by a manufacturing factory 43 are given tags 46 on which unique codes (UCs) are shown and shipped to a direct management store 44 and a secondary management store 45 of a maker A.

The maker A assigns such information as a product number, a manufacture date, a factory of manufacture, a shipment date, and a shipment destination (including a store name) to each product manufactured by it. These pieces of information are stored in the history management database 42 in such a manner as to be correlated with a unique code and are managed by the maker system 40.

The maker A has had a URL of the maker web server 41 registered in the base system 30 as a destination to which an inquiry relating to a unique code that relates to the maker A should be transferred. Therefore, each unique code relating to the maker A that is stored in the storage database 33 of the base system 30 is correlated with the URL of the maker web server 41 of the maker that is also stored in the storage database 33.

Bags 44A and 44B (both of which are genuine ones) which have been shipped to the direct management store 44 and the secondary management store 45, respectively, are displayed in the stores 44 and 45 for sale. In a state that the bags 44A and 44B are put up for sale in the direct management store 44 and the secondary management store 45, respectively, a consumer can acquire the following information from this service provision system.

The consumer reads the unique code of the bag 44A that is displayed in the direct management store 44 with a consumer terminal 50, and inquires about the bag 44A by transmitting the read-out unique code to the base web server 31 of the base system 30.

The base web server 31 judges whether or not the transmitted unique code is an already issued one. Since this unique code is one that was acquired by the maker that manufactured the bag 44A, the base web server 31 should judge that it is an already issued one. Then the base web server 31 judges whether a transfer URL corresponding to the unique code is registered or not. Since the URL of the maker web server 41 is correlated with the unique code, the inquiry from the consumer is transferred to the maker web server 41.

The maker web server 41 reads the information about the bag that bears the unique code relating to the inquiry from the history management database 42 and transmits it to the consumer terminal 50. As a result, history information to the effect that the bag of the inquiry is put up for sale in the direct management store (e.g., Haneda airport store) is displayed on the display screen 50A of the consumer terminal 50. Reading this information, the consumer can easily recognize that the bag of the inquiry is a genuine one before buying it because he or she has it in his or her hands in the Haneda airport store.

A consumer reads the unique code attached to the bag 45B that is displayed in the secondary management store 45 with a consumer terminal 50, and inquires about the bag 45B by transmitting the read-out unique code to the base web server 31 of the base system 30.

As in the case of the bag 44A displayed in the direct management store 44, the base web server 31 of the base system 30 judges that the unique code is an already issued one. Then the base web server 31 likewise judges that a transfer URL corresponding to the unique code is registered, and transfers the inquiry from the consumer to the maker web server 41.

The maker web server 41 likewise transmits the information about the bag that bears the unique code relating to the inquiry to the consumer terminal 50. As a result, history information to the effect that the bag of the inquiry is being handled by the secondary management store is displayed in a display picture 50B of the consumer terminal 50. Reading this information, the consumer can easily recognize that this bag is a genuine one before buying it.

Next, a case that fake bags are manufactured and distributed will be described below.

The bag 44A that is put up for sale in the direct management store 44 is bought, fake bags 44a, 44b, ···, 44n, ··· are manufactured by a fake maker 55 based on the bag 44A, and tags 47 on each of which a copy unique code UC' produced by copying the unique code (UC) that is attached to the bag A are shown are attached to the respective fake bags 44a, 44b, ···, 44n, ···.

Among the thus-manufactured fake bags 44a, 44b, ···, 44n, ···, the fake bag 44n is displayed and put up for sale in a fake store X 48. In a state that the fake bag 44n is put up for sale in the fake store X 48, a consumer can acquire the following information from this service provision system.

It is assumed that history information to the effect that the bag 44A on sale in the direct management store 44 has been bought (a sale date, a person or party who bought it, etc.) is stored in the history management database 42 in such a manner as to be correlated with the unique code assigned to the bag 44A and managed by the maker system 40.

The consumer reads the unique code (copy unique code (UC')) of the bag 44n that is displayed in the fake store 48 with a consumer terminal 50, and inquires about the bag 44n by transmitting the read-out unique code to the base web server 31 of the base system 30.

The base web server 31 judges whether or not the transmitted unique code is an already issued one. Since this unique code is one that has been acquired by the maker that has manufactured the bag 44A, the base web server 31 judges that it is an already issued one. Then the base web server 31 judges whether a transfer URL corresponding to the unique code is registered or not. Since the URL of the maker web server 41 is correlated with the unique code, the inquiry from the consumer is transferred to the maker web server 41.

The maker web server 41 reads the information about the bag that bears the unique code relating to the inquiry from the history management database 42 and transmits it to the consumer terminal 50. As a result, history information to the effect that the bag of the inquiry has already been sold by the direct management store (Haneda airport store) is displayed in a display picture 50C of the consumer terminal 50. Reading this information, the consumer can easily recognize that the bag of the inquiry may be a used one or a fake one before buying it because he or she holds the bag in his or her hands in a Hong Kong airport store.

Where fake bags are manufactured by a fake maker and tags on each of which a forged unique code produced by the fake maker on its own is shown are attached to the respective fake bags, a consumer can acquire the following information.

The consumer reads the unique code (forged unique code) of a fake bag with a consumer terminal 50 and inquires of the base web server 31.

The base web server 31 judges whether or not the transmitted unique code is an already issued one. Since this unique code is one that has been acquired by the fake maker on its own, the base web server 31 should judge that it is a unique code that has not been issued yet.

The base web server 31 transmits the judgment result to the consumer terminal 50. As a result, history information to the effect that the code of the inquiry has not been issued yet is displayed in a display picture of the consumer terminal 50. Reading this information, the consumer can easily recognize that it is highly probable that the code on the tag that is attached to the bag held by his or her hands is a forged one and the bag of the inquiry is a fake one, before buying it.

The unique code with which a consumer can make an inquiry is not limited to one that is attached to an actual bag that is displayed in a store (i.e., shown on a tag) and may be one that is displayed in, for example, a picture of Internet shopping. A consumer may make an inquiry by reading a unique code displayed in an Internet shopping picture and transmitting it.

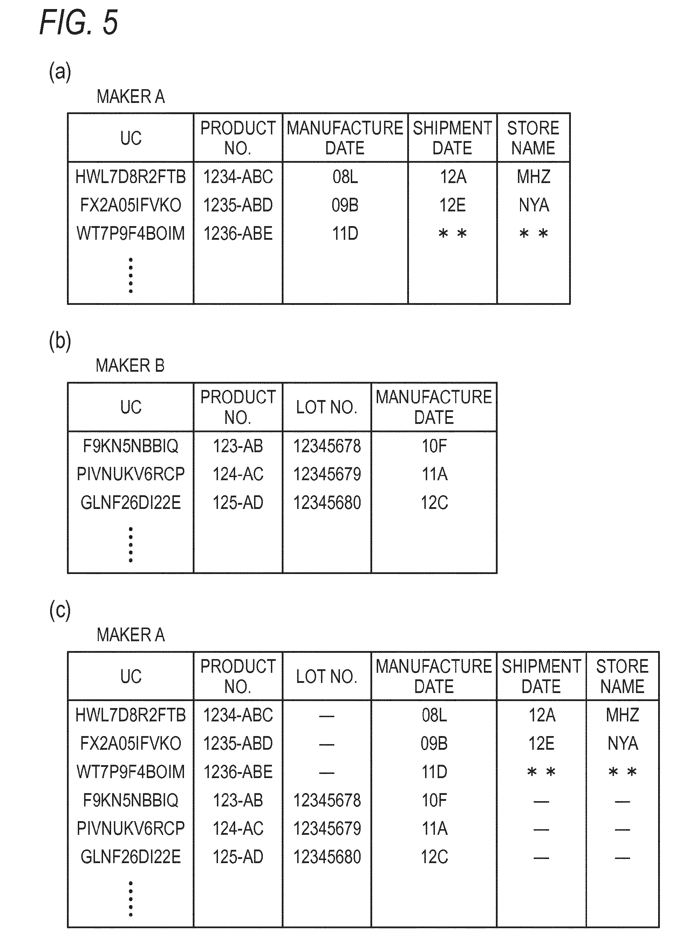

Fig. 5 illustrates an example of product management that is performed using unique codes in a case of merger of two makers (a maker A and a maker B) that manufacture and sell bags.

It is assumed that before the merger each of the maker A and the maker B has managed products on its own by acquiring unique codes and assigning them to its products, and that the maker A has survived after the merger and the maker B has disappeared.

As shown in Fig. 5(a), before the merger, the maker A has managed its products by assigning each product a product number, a manufacture date, a shipment date, and a shipment destination (store name) produced on its own in such a manner that they have been correlated with a unique code (UC). On the other hand, as shown in Fig. 5(b), before the merger, the maker B has managed its products by assigning each product a product number, a lot number, and a manufacture date produced on its own in such a manner that they have been correlated with a unique code (UC).

As shown in Fig. 5(c), the maker A which has survived after the merger can continue product management under the same framework using unique codes that have been issued uniquely and acquired by the maker A and the maker B without the need for producing any additional database, that is, merely by causing the databases that have been held by the two companies before the merger to complement each other. This makes it possible to reduce the load of integrating their quality management systems together. Therefore, the maker A can provide services even during a merging period without suspending the reception of inquiries transmitted from consumer terminals.

The same is true of a case that the maker A and the maker B handle completely different kinds of products rather than the same kind of products; the maker A can manage all products using unique codes that are assigned to the products uniquely. As a result, the maker can reduce the cost of the quality management to a large extent.

Under such a management framework, using unique codes, consumers can easily acquire highly reliable product information about branded products they are going to buy.

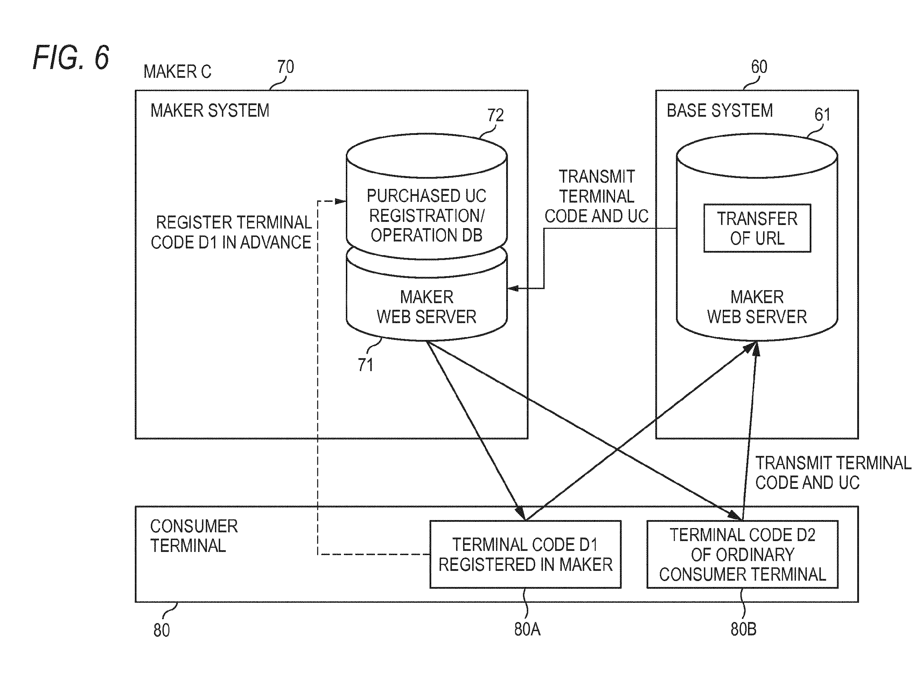

Fig. 6 illustrates an example method of sorting among product items under distribution in which sets of pieces of product information about sorted products are acquired using unique codes. The term "sorted products" means, for example, components in which a failure has been found after shipment from a factory and that hence need to be returned from customer warehouses or products including such components.

A base system 60 is equipped with a base web server 61 and receives an inquiry from a consumer terminal 80. If a transfer URL corresponding to a unique code (UC) relating to the inquiry is registered therein, the base system 60 performs transfer-to-URL processing. Like the base system 2 shown in Fig. 1, the base system 60 is also equipped with a UC issuing server and a storage database (neither of which is shown).

A maker system 70 of a maker C is equipped with a maker web server 71 and a purchased UC registration/operation database (DB) 72. The maker web server 71 has a function of answering an inquiry that originates from a consumer terminal 80 and is transferred from the base web server 61 of the base system 60. The purchased UC registration/operation database 72 has the same functions as the purchased UC registration/operation database 22 shown in Fig. 1. Like the maker system 3 shown in Fig. 1, the maker system 70 is also equipped with a request server (not shown).

Each of consumer terminals 80 is a tool for making an inquiry relating to a unique code. Terminals 80A and 80B (e.g., smartphone or cell phone) capable of making a communication over a network can be used as the consumer terminals 80. A base application for making an inquiry to the base web server 61 is installed in the consumer terminals 80A and 80B and they are assigned respective terminal codes D1 and D2 for identification of them by the base web server 61.

Assume that a situation that requires selection among items under distribution occurred in the following manner.

A maker C that has acquired (purchased) unique codes from the base system 60 attached labels on which unique codes are shown in the form of bar codes to components manufactured by itself and shipped the components from a factory. Then a failure has been found in part of the components, which means occurrence of sorted products. Because of the occurrence of the sorted products, the maker C has had unique codes assigned to the sorted products registered in the purchased UC registration/operation database 72 as selection subject unique codes.

In response to the above situation, the owner of the consumer terminal 80A applies to the maker system 70 for registration of the terminal code D1 of the consumer terminal 80A so that the consumer terminal 80A can be used as a distribution item sorting tool. On the other hand, the owner of the consumer terminal 80B does not make such an application for registration.

The maker system 70, which has received the application, the maker system 70 acknowledges the terminal code D1 of the consumer terminal 80A as a code of a sorting-use terminal and registers it in the purchased UC registration/operation database 72.

As a result of this registration, particular information about the sorted product will be transmitted to the consumer terminal 80A which has been acknowledged as a sorting-use terminal.

Incidentally, a procedure according to which each of the consumer terminals 80 shown in fig. 6 acquires product information using a unique code is as follows.

When an inquiry relating to a unique code is transmitted from a consumer terminal 80 (its terminal code and the UC are transmitted), the inquiry is received by the base web server 61 and then transferred to the URL of the maker web server 71 (the terminal code and the UC are transmitted). The maker web server 71 judges whether or not the transmitted terminal code is registered in the purchased UC registration/operation database 72 as a code of a sorting-use terminal. If made an affirmative judgment, then the maker web server 71 judges whether or not the transmitted unique code is identical to a unique code assigned to a sorted product. If made an affirmative judgment, the maker web server 71 transmits, to the consumer terminal 80, particular information that is stored in the purchased UC registration/operation database 72 in such a manner as to be correlated with the unique code.

As a result of the above acquisition procedure, information such as "The product having the unique code relating to the inquiry is a sorting-target product and hence needs to be returned" is displayed in a display picture of the consumer terminal 80A which is acknowledged as a sorting-use terminal. When received an inquiry from the consumer terminal 80B, since the consumer terminal 80B is not acknowledged as a sorting-use terminal, the maker web server 71 does not send information about a sorted product to it and, instead, transmits only general information about the product.

As described above, by merely having the consumer terminal 80A registered in the maker system 70, the consumer can acquire information about a sorted product by the consumer terminal 80A using a unique code. Therefore, no particular hardware other than the consumer terminal 80A is necessary and hence the sorted product can be returned early and the load of the quality management can be lowered.

Also when the maker C shown in Fig. 6 merges with another company, the provision of a service can be continued under the same management framework by performing product management using unique codes. That is, also when the maker C merges with another company, as in the example product management of the bag maker A which is described above with reference to Fig. 5, the maker C can continue product management under the same framework using unique codes that have been issued uniquely and acquired by the makers concerned without the need for producing any additional database, that is, merely by causing the databases that have been held by the two companies before the merger to complement each other. This makes it possible to reduce the load of integrating their quality management systems together.

Therefore, even during a merging period, the maker C can continue to provide information about sorted products in, for example, the manner illustrated in Fig. 6 without suspending the reception of inquiries transmitted from consumer terminals. Under such a management framework, each consumer terminal can easily acquire highly reliable information about a sorted product using a unique code.

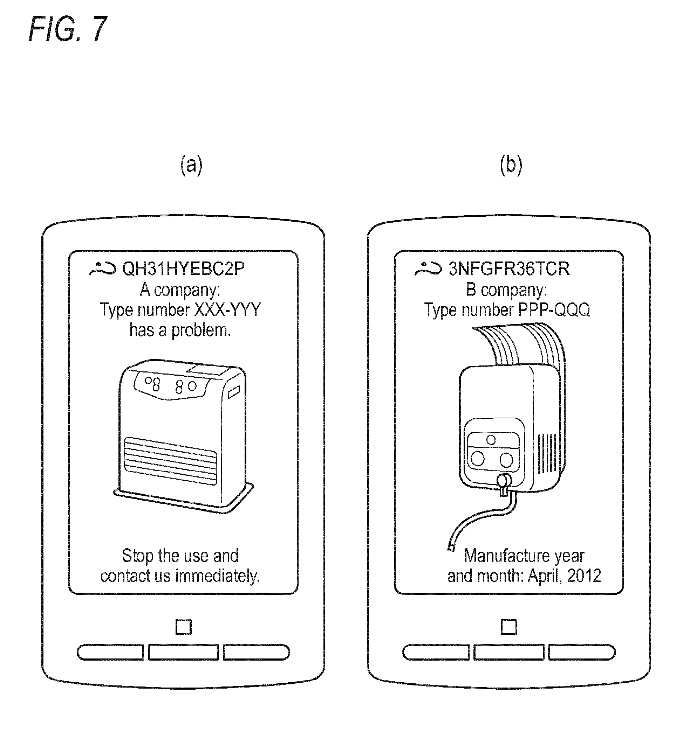

Fig. 7 illustrates an example method of collection of recalled products in which sets of pieces of product information about recalled products are acquired using unique codes. Although a drawing showing a system configuration for the example method of Fig. 7 is omitted, as in the system configuration shown in Fig. 1, the system is equipped with a base system 2, a maker system 3, and a consumer terminal 4. Information stored in the maker system 3 is provided in response to an inquiry that is made by the consumer terminal 4 using a unique code.

More specifically, the consumer terminal 4 reads a unique code and transmits an inquiry to the base web server 11. The base web server 11 transfers the received inquiry to the URL of the maker web server 23. The maker web server 23 judges whether or not the transmitted unique code coincides with a unique code that is assigned to a recalled product. If made an affirmative judgment, the maker web server 23 transmits, to the consumer terminal 4 information about the recalled product that is stored in the purchased UC registration/operation database 22 in such a manner as to be correlated with the unique code.

Therefore, when the consumer terminal 4 has made an inquiry relating to a unique code that is assigned to a recalled product, pieces of warning information such as "The product of the inquiry has a problem" and "Stop the use and contact us immediately" (see Fig. 7(a)) are displayed in a display picture of the consumer terminal 4. If the unique code relating to the inquiry does not coincide with a unique code of any recalled target product, only general product information such as a product type name, a manufacture date, etc. are displayed in a display picture of the consumer terminal 4 (see Fig. 7(b)).

As described above, information indicating whether or not a product is a recalled target product can be displayed in a display picture of the consumer terminal 4 merely by reading a unique code that is attached to the product with the consumer terminal 4 and making an inquiry. Since unique codes used are issued uniquely, even if recalled target products span different kinds of products such as an electric heater, a water heater, an air conditioner, and a personal computer, a consumer can make an inquiry easily according to the same procedure. Since pieces of information about inquiries are accumulated successively on the maker side, the maker can easily recognize the manner of progress of consumer actions (recall response rate). Thus, the maker can consider what are effective measures and hence collect recalled products earlier.

Also when makers each of which has not completed the collection of recalled products merge into a single company, the provision of services can be continued under the same management framework by performing product management using unique codes. That is, as in the example product management of the bag maker A which is described above with reference to Fig. 5, the makers can continue the same product management using unique codes that have been issued uniquely and acquired by the two makers without the need for producing any additional database, that is, merely by causing the databases that have been held by the two companies before the merger to complement each other.

Therefore, even during a merging period, the makers can continue to provide information about recalled products in, for example, the manner illustrated in Fig. 7 without suspending the reception of inquiries transmitted from consumer terminals 4. Under such a management framework, each consumer terminal 4 can easily acquire highly reliable information about a recalled product using a unique code.

Although the present invention has been described in detail by referring to the particular embodiment, it is apparent to those skilled in the art that various changes and modifications are possible without departing from the spirit and scope of the present invention.

The present application is based on Japanese Patent Application No. 2012-209877 filed on September 24, 2012, the contents of which are incorporated herein by reference.

### Reference Signs List

1: Service provision system; 2, 30, 60: Base system; 3, 40, 70: Maker system; 4, 50, 80: Consumer terminal; 11, 31, 61: Base web server; 11a: Reception server; 11b: Transfer-to-URL server; 12, 32: UC issuing server; 13, 33: Storage database; 21: Request server; 22, 72: Purchased UC registration/operation database; 23, 41, 71: Maker web server; 42: History management database.

## Claims

1. A service provision method for requesting issuance of a unique code for identification of a product by a maker terminal, issuing the unique code randomly and uniquely in response to the issuance request by a base terminal, and providing a service using the unique code assigned to a product, the service provision method comprising:
a step that a consumer terminal acquires a unique code that is attached to a product and makes an inquiry about the product by transmitting the acquired unique code to the base terminal;
a step that the base terminal judges whether or not the transmitted unique code is an issued one, and
if judged that the transmitted unique code is not an issued one, the base terminal transmits information to an effect that the transmitted unique code is not an issued one to the consumer terminal, whereas
if judged that the transmitted unique code is an already issued one, the base terminal judges whether or not a URL of the maker terminal is received from the maker terminal in advance as a transfer destination URL that is correlated with the transmitted unique code, and
if judged that the URL of the maker terminal is not received, the base terminal transmits information to an effect that the transmitted unique code is an already issued one to the consumer terminal, whereas
if judged that the URL of the maker terminal is received, the base terminal transfers the inquiry to the URL of the maker terminal that is the transfer destination; and
a step that the maker terminal transmits information corresponding to the unique code relating to the transferred inquiry to the consumer terminal.

2. The service provision method according to claim 1, wherein the inquiry from the consumer terminal is transmitted to the base terminal over a network.

3. The service provision method according to claim 2, wherein the consumer terminal includes a personal computer or a smartphone.

4. The service provision method according to any one of claims 1 to 3, wherein the information that corresponds to the unique code transmitted from the maker terminal to the consumer terminal contains a manufacture and sale history of the product to which the unique code is assigned.

5. The service provision method according to any one of claims 1 to 3, wherein the information that corresponds to the unique code transmitted from the maker terminal to the consumer terminal contains information indicating whether or not the product to which the unique code is assigned corresponds to a sorted product.

6. The service provision method according to any one of claims 1 to 3, wherein the information that corresponds to the unique code transmitted from the maker terminal to the consumer terminal contains information indicating whether or not the product to which the unique code is assigned corresponds to a recalled product.

7. A service provision system which provides a service using unique codes that are assigned uniquely to products for identification of the products, the service provision system comprising:
a consumer terminal which acquires a unique code that is attached to a product and makes an inquiry about the product by transmitting the acquired unique code over a network;
a base terminal which receives the transmitted inquiry and judges whether or not the unique code is an issued one, wherein
if judged that the transmitted unique code is not an issued one, the base terminal transmits information to an effect that the unique code is not an issued one to the consumer terminal, whereas
if judged that the transmitted unique code is an already issued one, the base terminal judges whether or not a transfer destination URL that is correlated with the unique code is received in advance, and
if judged that the transfer destination URL is not received, the base terminal transmits information to an effect that the unique code is an already issued one to the consumer terminal, whereas
if judged that the transfer destination URL is received, the base terminal transfers the inquiry to the transfer destination URL; and
a maker terminal which contains the transfer destination URL and transmits product information that is stored to be correlated with the unique code to the consumer terminal in response to the transferred inquiry.
